# EUROPÄISCHE PATENTANMELDUNG

(11) **EP 0 908 221 A1**
(43) Veröffentlichungstag der Anmeldung: **14.04.1999**
(21) Anmeldenummer: 97116104.7
(22) Anmeldetag: 16.09.1997
(51) Int. Cl.: B01D 53/86

(54) **Katalysator und Verfahren zur Minderung von Dioxinen im Niedertemperaturbereich**

(71) Anmelder: SIEMENS AKTIENGESELLSCHAFT, 80333 München (DE)
(72) Erfinder: Hums, Erich, Dr., 91093 Hessdorf (DE); Klatt, Hartung, 90443 Nürnberg (DE)

(57) **Zusammenfassung**

Es wird ein Katalysator aus einem mit einem Übergangsmetall dotierten anorganischen Adsorptionsmittel für Dioxine mit einer spezifischen Oberfläche von mehr als 70 m²/g zur Minderung von Dioxinen im Niedertemperaturbereich eines Abgases einer technischen Anlage sowie ein entsprechendes Verfahren angegeben. Durch Kontaktierung des Abgases mit einem derartigen Katalysator läßt sich eine wesentlich kostengünstigere und effektivere Abscheidung von Dioxinen im Niedertemperaturbereich erzielen, als es bislang mittels in das Abgas eingebrachter Adsorptionsmittel möglich war.

## Beschreibung

Die Erfindung betrifft einen Katalysator, welcher in einem Niedertemperaturbereich, d.h. bei Temperaturen von weniger als 250 °C, in der Lage ist, Dioxine katalytisch zu zersetzen. Ebenso betrifft die Erfindung ein entsprechendes Verfahren zum katalytischen Abbau von Dioxinen, bei welchem ein Dioxine enthaltendes Abgas im Niedertemperaturbereich mit einem solchen Katalysator kontaktiert wird.

Der Begriff "Dioxine" wird hierbei als ein Sammelbegriff für die Gruppe der zyklischen halogenierten aromatischen Polyether verwendet. Hierzu gehören insbesondere die zyklischen Ether (Furane) sowie die zyklischen Diether (die eigentlichen Dioxine). Als besonders toxisch wirkende Vertreter beider Gruppen seien hier die polychlorierten Dibenzodioxine (PCDD) und die polychlorierten Dibenzofurane (PCDF) genannt. Insbesondere können Dioxine durch unvollständige Verbrennung entstehen und/oder durch die sogenannte De Novo Synthese bei Vorhandensein von organischen Kohlenstoffverbindungen, Alkali- oder Erdalkalichloriden sowie als Katalysatoren wirkende Metallverbindungen beim Abkühlen im Abgas technischer Anlagen neu gebildet werden.

Da herkömmliche Katalysatoren zur Dioxinentfernung erst oberhalb von 400 °C effektiv arbeiten, werden bislang zur Niedertemperaturminderung von Dioxinen aus dem Abgas einer technischen Anlage, wie einer Müllverbrennungsanlage, einem Fossilkraftwerk oder aber auch einer Sinteranlage an geeigneter Stelle Adsorptionsmittel für Dioxine als Zuschlagstoff beigegeben und als mit Dioxinen befrachteter Filterstaub durch einen nachgeschalteten Filter wie einem Elektrofilter oder einem Gewebefilter dem Abgas wieder entnommen. Auf diese Weise lassen sich die nach Durchführung an sich bekannter Reinigungsverfahren wie saurer Rauchgaswäsche, Entstaubung mittels Zyklonen oder Elektrofiltern und katalytischem Abbau von Schadstoffen noch in dem Abgas verbliebene oder neu gebildete Dioxine entfernen.

Hierzu ist es aus W. Weiss: "Minderung der PCDD/PCDF-Emissionen an einer Eisenerzsinteranlage", VDI-Berichte Nr. 1298, (1996), Seiten 249 ff, bekannt, dem Abgas einer Sinteranlage nach Durchströmen eines Elektrofilters als Zuschlagstoff eine Mischung aus Kalziumhydroxid Ca(OH)₂ und Kohle in Form von Herdofenkoks oder Aktivkohle beizugeben, den mit Dioxinen teilweise befrachteten Zuschlagstoff mittels einer Staubfilterung an einem Gewebefilter dem Abgas wieder zu entnehmen und diesem erneut zuzugeben. Dabei dient die Kohle selbst als ein Adsorptionsmittel für die Dioxine, während das Kalziumhydroxid die Gefahr der Entzündung der Kohle verringert.

Des weiteren ist aus G. Mayer-Schwinning et al.: "Minderungstechniken zur Abgasreinigung für PCDD/F", VDI-Berichte Nr. 1298, (1996), Seiten 191 ff, bekannt, dem Abgas einer Müllverbrennungsanlage nach konventioneller Abgasreinigung mit Hilfe eines Wirbelschichtreaktors als Dioxine adsorbierenden Zuschlagstoff Zeolithe beizugeben. Die sich im Abgas befindlichen, teilweise mit Dioxinen beladenen Zeolithe werden wiederum mittels eines nachgeschalteten Gewebefilters entnommen und dem Wirbelschichtreaktor zugeführt. Man spricht dabei von einer sogenannten zirkulierenden Wirbelschicht. Auch ist es bekannt, die Zeolithe zusammen mit Kalziumhydroxid dem Abgas zuzugeben.

Der verbrauchte, mit Dioxinen beladene Zuschlagstoff oder das Adsorptionsmittel muß nachteiligerweise auf einer Deponie endgelagert oder durch eine thermische Behandlung oder durch Einbindung in eine Schlacke unschädlich gemacht werden. Auch sind sowohl die Zeolithe als auch das bei Verwendung der Kohle als Zuschlagstoff unabdingbare Kalziumhydroxid vergleichsweise teuer, so daß das Einhalten der Emissionsgrenzwerte für Dioxine bei einer technischen Anlage mit Hilfe des genannten Niedertemperaturverfahrens mit einem hohen Kostenaufwand verbunden ist.

Bisherige Ansätze, zur Niedertemperaturminderung von Dioxinen einen geeigneten Katalysator anzugeben und auf diese Weise die genannten Nachteile der herkömmlichen Verfahren zu überwinden, scheiterten an der technischen Realisierung eines derartigen Katalysators.

Aufgabe der Erfindung ist es, einen derartigen Katalysator zur Niedertemperaturminderung von Dioxinen sowie ein entsprechendes Verfahren anzugeben.

Die erstgenannte Aufgabe wird erfindungsgemäß durch einen Katalysator aus einem anorganischen Adsorptionsmittel für Dioxine mit einer spezifischen Oberfläche von mehr als 70 m²/g gelöst, wobei das Adsorptionsmittel zusätzlich mit wenigstens einem Metall aus der Gruppe der Übergangsmetalle dotiert ist.

Die Erfindung geht dabei von der Überlegung aus, daß bei einem Adsorptionsmittel ein dauerhafter Kontakt zwischen dem adsorbierten Dioxin und dem Adsorptionsmittel hergestellt wird. Bei einer langen Kontaktzeit zwischen dem Dioxin und dem Adsorptionsmittel genügt jedoch eine vergleichsweise kleine katalytische Aktivität, um die Dioxine zu zersetzen. Ist daher ein Adsorptionsmittel gleichzeitig für die Zersetzung von Dioxinen katalytisch aktiv, so führt auch die im Niedertemperaturbereich geringe katalytische Aktivität dazu, daß die adsorbierten Dioxine vollständig zersetzt werden.

Die katalytische Aktivierung zur Zersetzung von Dioxinen eines anorganischen Adsorptionsmittels kann jedoch dadurch geschehen, daß dieses mit einem Metall dotiert wird, dessen katalytische Aktivität für den Abbau von Dioxinen bekannt ist. Es hat sich nun gezeigt, daß derartige Metalle im wesentlichen alle Übergangsmetalle sind. Anregungen hierzu findet der Fachmann beispielsweise in der EP 0 252 521 B1. Die dotierten Metalle stellen in dem Adsorptionsmittel ein Adsorptionszentrum dar, an welchem das adsorbierte Dioxin in Gegenwart von Sauerstoff oder von sauerstoffspendenden Verbindungen in unschädliche Substanzen wie Halogensäure, Wasser und Kohlendioxid zersetzt wird, welche aufgrund ihrer anderen Größe sowie chemischen und physikalischen Eigenschaften von dem Adsorptionsmittel desorbieren.

Da die Dioxine katalytisch zersetzt werden, entfällt gegenüber herkömmlichen Verfahren die Entsorgung der mit Dioxinen beladenen Adsorptionsmittel, was zu einer deutlichen Kosteneinsparung führt.

Die vergleichsweise hohe spezifische Oberfläche von 70 m²/g ist derart gewählt, daß hierbei die Adsorptionswahrscheinlichkeit des Adsorptionsmittels für Dioxine noch ausreicht, um eine genügend hohe Abscheiderate von Dioxinen aus dem Abgas zu erzielen.

In vorteilhafter Ausgestaltung der Erfindung beträgt die spezifische Oberfläche des Adsorptionsmittels mehr als 100 m²/g.

Der Katalysator selbst kann in Form einer Schüttung, in Form von Pellets oder in Form eines Granulats vorliegen. Auch kann er als ein Formkörper in Gestalt eines Vollextrudats in Wabenform oder in Form eines mit dem Katalysator beschichten Tragkörpers, beispielsweise einer metallischen oder keramischen Platte, vorliegen.

Das Adsorptionsmittel für Dioxine kann vorteilhafterweise ein Aluminiumoxid, ein Florisil, welches ein hochselektives Adsorbens der Floridin Corporation aus 84 % Siliziumdioxid, 15,5 % Magnesiumoxid und 0,5 % Natriumsulfat bezeichnet, ein Molekularsieb oder ein Zeolith, d.h. ein Gerüst Aluminosilikat, welches aufgrund seiner definierten Gitterstruktur charakteristische Mikroporen in der Größenordnung von Gasmolekülen aufweist, sein. Auch ein Kieselgel stellt ein derartiges Adsorptionsmittel dar. Dabei haben insbesondere Zeolithe eine hohe spezifische Oberfläche von 800 bis 1000 m²/g und weisen eine hohe Adsorptionsfähigkeit gerade auch für Dioxine auf. Zur Definition von Zeolithen und Molekularsieben sei im übrigen auf Römpps Chemie-Lexikon, Franckh'sche Verlagshandlung, Stuttgart 1988, 8. Auflage, Seiten 4690 - 4691 bzw. Seiten 2652 - 2653, verwiesen.

Besonders geeignet als Katalysator zur Minderung von Dioxinen im Niedertemperaturbereich ist hierbei ein dotierter saurer Y-Zeolith mit einem Verhältnis von Siliziumoxid zu Aluminiumoxid von mehr als 3:1 und Porenweiten von ca. 0.8 nm.

Ebenso ist ein synthetisch hergestellter sogenannter DAY-Zeolith, welcher durch Dealuminierung eines Y-Zeolithen hergestellt werden kann, nach Dotierung mit einem Übergangsmetall als Katalysator zum Abbau von Dioxinen im Niedertemperaturbereich geeignet.

In weiterer vorteilhafter Ausgestaltung der Erfindung wird das Adsorptionsmittel mit wenigstens einem Metall ausgewählt aus der Gruppe, welche Titan, Vanadium, Wolfram, Molybdän, Eisen, Kupfer, Rhenium und Cer enthält, dotiert. Diese ausgewählten Metalle weisen eine besonders hohe katalytische Aktivität zum Abbau von Dioxinen auf.

Die zweitgenannte Aufgabe wird erfindungsgemäß gelöst durch ein Verfahren zur Niedertemperaturminderung von Dioxinen in einem Abgas einer technischen Anlage, wobei das Abgas bei einer Temperatur von weniger als 250 °C mit einem Katalysator der vorgenannten Art kontaktiert wird, und wobei die Dioxine oxidativ zersetzt werden.

Dabei werden die Dioxine entweder mit im Abgas selbst enthaltenem Restsauerstoff oder vorzugsweise mit Hilfe eines geeigneten Oxidationsmittels wie beispielsweise einem Peroxid, insbesondere Wasserstoffperoxid, welches dem Abgas zusätzlich beigemengt wird, oxidativ zersetzt. Das Oxidationsmittel wird dabei vor Kontaktierung mit dem Katalysator dem Abgas beigemengt. Auf diese Weise wird sichergestellt, daß stets genügend Sauerstoff für die Oxidation der adsorbierten Dioxine vorhanden ist.

In einer weiteren vorteilhaften Ausgestaltung des erfindungsgemäßen Verfahrens wird das Abgas mittels eines Wirbelbettreaktors mit dem Katalysator kontaktiert. Hierzu wird der Wirbelbettreaktor mit dem Katalysator in feinkörniger Form befüllt und das Abgas durch diesen hindurchgeleitet. Dabei wird das Abgas durch die auftretende Verwirbelung intensiv mit dem Katalysator kontaktiert, so daß eine hohe Abscheiderate der Dioxine erzielt wird. Der mit dem Abgas mitgeführte Katalysator wird über einen nachgeschalteten geeigneten Filter dem Abgas wieder entnommen und dem Wirbelbettreaktor erneut zugeführt.

Besonders ein dotierter Zeolith bietet auch den Vorteil, daß er sich durch Extrusion zu einem von einem Abgas durchströmbaren Formkörper beispielsweise in Wabenform verarbeiten läßt. Ein solcher Katalysator kann dann in gleicher Weise wie ein herkömmlicher Katalysator, welcher in einem Temperaturbereich von oberhalb 400 °C arbeitet, eingesetzt werden. Damit entfällt die aufwendige Entstaubung des Abgases bei Verwendung herkömmlicher Adsorptionsmaterialien oder bei Verwendung des Niedertemperaturkatalysators in Pulverform.

## Patentansprüche

1. Katalysator zur Minderung von Dioxinen im Niedertemperaturbereich, aus einem anorganischen Adsorptionsmittel für Dioxine mit einer spezifischen Oberfläche vom mehr als 70 m²/g, welches mit wenigstens einem Metall aus der Gruppe der Übergangsmetalle dotiert ist.

2. Katalysator nach Anspruch 1,
**dadurch gekennzeichnet,** daß die spezifische Oberfläche mehr als 100 m²/g beträgt.

3. Katalysator nach Anspruch 1 oder 2,
**dadurch gekennzeichnet,** daß er als waben- oder plattenförmiger Formkörper oder in Form von Pellets, in Form eines Granulats oder in Form einer Schüttung ausgebildet ist.

4. Katalysator nach einem der Ansprüche 1 bis 3,
**dadurch gekennzeichnet,** daß das Adsorptionsmittel ein Aluminiumoxid ist.

5. Katalysator nach einem der Ansprüche 1 bis 3,
**dadurch gekennzeichnet,** daß das Adsorptionsmittel ein Florisil ist.

6. Katalysator nach einem der Ansprüche 1 bis 3,
**dadurch gekennzeichnet,** daß das Adsorptionsmittel ein Molekularsieb ist.

7. Katalysator nach einem der Ansprüche 1 bis 3,
**dadurch gekennzeichnet,** daß das Adsorptionsmittel ein Zeolith ist.

8. Katalysator nach Anspruch 7,
**dadurch gekennzeichnet,** daß der Zeolith ein saurer Y-Zeolith mit einem Verhältnis von Siliziumoxid zu Aluminumoxid von etwa 20:1 ist.

9. Katalysator nach Anspruch 7,
**dadurch gekennzeichnet,** daß der Zeolith ein synthetischer DAY-Zeolith ist.

10. Katalysator nach einem der Ansprüche 1 bis 9,
**dadurch gekennzeichnet,** daß das Adsorptionsmittel mit wenigstens einem Metall ausgewählt aus der Gruppe, welche Titan, Vanadium, Wolfram, Molybdän, Eisen, Kupfer, Rhenium und Cer enthält, dotiert ist.

11. Verfahren zur Niedertemperaturminderung von Dioxinen in einem Abgas einer technischen Anlage, wobei das Abgas bei einer Temperatur von weniger als 250°C mit einem Katalysator gemäß einem der vorhergehenden Ansprüche kontaktiert wird und dabei die Dioxine oxidativ zersetzt werden.

12. Verfahren nach Anspruch 11,
**dadurch gekennzeichnet,** daß die Dioxine mit im Abgas enthaltenem Restsauerstoff oxidativ zersetzt werden.

13. Verfahren nach Anspruch 11,
**dadurch gekennzeichnet,** daß dem Abgas ein Oxidationsmittel, insbesondere ein Peroxid, beigegeben wird, und die Dioxine mit diesem oxidativ zersetzt werden.

14. Verfahren nach einem der Ansprüche 11 bis 13,
**dadurch gekennzeichnet,** daß das Abgas mittels eines Wirbelbettreaktors mit dem Katalysator kontaktiert wird.

15. Verfahren nach einem der Ansprüche 11 bis 13,
**dadurch gekennzeichnet,** daß der Katalysator ein mit Strömungskanälen versehener Formkörper ist und das Abgas zur Kontaktierung mit dem Katalysator durch den Formkörper geleitet wird.
